# EUROPEAN PATENT APPLICATION

(11) **EP 4 653 693 A1**
(43) Date of publication of application: **26.11.2025**
(21) Application number: 23920644.4
(22) Date of filing: 08.05.2023
(51) Int. Cl.: F03D 3/06

(54) **LIMITING APPARATUS FOR WIND-ASSISTED PROPULSION ROTOR, AND WIND-ASSISTED PROPULSION SYSTEM**

(30) Priority: 07.02.2023 CN 202310071901
(71) Applicant: CSSC Shanghai Marine Energy Saving Technology co., Ltd., Shanghai 200011 (CN)
(72) Inventor: ZHU, Yuzhu, Shanghai 200011 (CN); GUO, Fengshan, Shanghai 200011 (CN); WU, Youhua, Shanghai 200011 (CN); SUN, Chengcan, Shanghai 200011 (CN); HUANG, Guofu, Shanghai 200011 (CN); PENG, Zuguang, Shanghai 200011 (CN); WANG, Chulong, Shanghai 200011 (CN)
(74) Representative: Chimini, Francesco
(86) International application number: PCT/CN2023/092660
(87) International publication number: WO 2024/164446

(57) **Abstract**

Provided are a limiting apparatus for a wind-assisted propulsion rotor and a wind-assisted propulsion system. The limiting apparatus for a wind-assisted propulsion rotor provided by the present application includes multiple limiting units distributed along an outer periphery or an inner periphery of an outer cylinder. Each limiting unit includes a roller mechanism, an adjustment mechanism, and an elastic member. A first end of a mounting bracket in the roller mechanism is rotatably disposed on a base or an inner tower. A limiting roller in the roller mechanism is rotatably disposed on a second end of the mounting bracket. An outer peripheral surface of the limiting roller abuts against an outer wall or an inner wall of the outer cylinder. One end of an adjustment assembly in the adjustment mechanism abuts against the second end of the mounting bracket. The adjustment assembly is configured to adjust the force between the limiting roller and the outer cylinder. The elastic member is clamped between the adjustment assembly and the second end of the mounting bracket.

## Description

The present application claims priority to Chinese Patent Application No. 202310071901.9 filed with the China National Intellectual Property Administration (CNIPA) on Feb. 07, 2023, the disclosure of which is incorporated herein by reference in its entirety.

### TECHNICAL FIELD

The present application relates to the technical field of wind-assisted propulsion rotors, for example, to a limiting apparatus for a wind-assisted propulsion rotor, and a wind-assisted propulsion system.

### BACKGROUND

The operating principle of a wind-assisted propulsion rotor is the Magnus effect. A ship equipped with a wind-assisted propulsion rotor, when in a crosswind or oblique wind condition, can adjust the rotation direction of the rotor to generate thrust in the forward direction, thereby achieving a propulsion effect.

A wind-assisted propulsion rotor generally includes a base, an inner tower, and an outer cylinder. The inner tower is fixedly disposed on the base, and the outer cylinder is rotatably sleeved on the outer side of the inner tower. Due to influences from the manufacturing and use environmental conditions, there may be deviations in coaxiality between the axis of the outer cylinder and the axis of the inner tower. To limit radial runout of the outer cylinder, multiple limiting wheel devices are typically arranged along the circumference of the outer cylinder. Each limiting wheel device includes a limiting wheel abutting against the wall of the outer cylinder to restrict radial runout of the outer cylinder.

The wind-assisted propulsion rotor is typically very tall, with a maximum diameter of up to six meters and a maximum height of nearly forty meters. The outer cylinder needs to rotate at high speed around the central axis of the inner tower, with a high linear speed and a significant moment of inertia. To ensure smooth high-speed operation of the outer cylinder and minimize its oscillation, high requirements are placed on the limiting wheel devices at the bottom of the outer cylinder.

In related art, the axles of limiting wheels in limiting wheel devices are slidably disposed on the base, resulting in low contact stability between the limiting wheels and the outer cylinder, as well as challenges in assembly workload and mounting precision control. If the assembly error of multiple limiting wheel devices is too large, the outer cylinder may experience severe oscillation during high-speed operation, increasing the load on the rollers and directly affecting their service life. Additionally, it becomes difficult to ensure continuous smooth operation of the rotor, which may prevent the outer cylinder from reaching the designed rotational speed and may also lead to significant internal stresses and torsional deformation in localized regions of the outer cylinder, potentially causing safety incidents with the rotor.

### SUMMARY

The present application provides a limiting apparatus for a wind-assisted propulsion rotor and a wind-assisted propulsion system, which feature a simple structure, facilitate assembly and adjustment, improve contact stability between limiting rollers and the outer cylinder, and thereby ensure stability during high-speed operation of the outer cylinder.

A limiting apparatus for a wind-assisted propulsion rotor is provided. The wind-assisted propulsion rotor includes a base, an inner tower, and an outer cylinder. The inner tower is fixedly disposed on the base, and the outer cylinder is rotatably sleeved on the outer side of the inner tower. The limiting apparatus for the wind-assisted propulsion rotor includes multiple limiting units distributed along the outer periphery or the inner periphery of the outer cylinder. Each limiting unit of the multiple limiting units includes a roller mechanism, an adjustment mechanism, and an elastic member. The roller mechanism includes a limiting roller and a mounting bracket. The mounting bracket has a first end and a second end along a first direction. The first end is rotatably disposed on the base or the inner tower. The limiting roller is rotatably disposed on the second end. The outer peripheral surface of the limiting roller abuts against the outer wall or the inner wall of the outer cylinder. The adjustment mechanism includes an adjustment assembly. One end of the adjustment assembly abuts against the second end. The adjustment assembly is configured to adjust the force between the limiting roller and the outer cylinder. The elastic member is clamped between the adjustment assembly and the second end.

As an optional solution of the limiting apparatus for the wind-assisted propulsion rotor, the adjustment mechanism also includes a pressure detection member configured to detect the pressure between the adjustment assembly and the second end.

As an optional solution of the limiting apparatus for the wind-assisted propulsion rotor, the limiting apparatus also includes an alarm mechanism configured to issue an alarm prompt based on the detection result of the pressure detection member.

As an optional solution of the limiting apparatus for the wind-assisted propulsion rotor, the adjustment assembly includes a fixed seat, a screw, and a locking member. The fixed seat is fixedly disposed on the base or the inner tower. The screw penetrates the fixed seat and abuts against the elastic member and is threadedly connected to the fixed seat. The locking member is configured to lock or unlock the screw with respect to the fixed seat.

As an optional solution of the limiting apparatus for the wind-assisted propulsion rotor, an even number of limiting units are provided, and the multiple limiting units are evenly distributed along the outer periphery or the inner periphery of the outer cylinder.

As an optional solution of the limiting apparatus for the wind-assisted propulsion rotor, the elastic member is a cylindrical structure, and a first end and a second end of the elastic member along an axial direction of the elastic member abut against the adjustment assembly and the second end, respectively.

As an optional solution of the limiting apparatus for the wind-assisted propulsion rotor, the elastic member includes a main body portion, a first adapter portion is disposed on a first end of the main body portion along a second direction, the first adapter portion is a frusto-conical structure, the large-diameter end of the first adapter portion is connected to the main body portion, and the small-diameter end of the first adapter portion abuts against the adjustment assembly.

As an optional solution of the limiting apparatus for the wind-assisted propulsion rotor, the elastic member includes a main body portion, a second adapter portion is disposed on a second end of the main body portion along a second direction, the second adapter portion is a frusto-conical structure, the large-diameter end of the second adapter portion is connected to the main body portion, and the small-diameter end of the second adapter portion abuts against the second end.

As an optional solution of the limiting apparatus for the wind-assisted propulsion rotor, the first end is provided with a rotating shaft, a first end of the rotating shaft is fixedly connected to the first end, and a second end of the rotating shaft is rotatably connected to the base or the inner tower.

A wind-assisted propulsion system is provided and includes the preceding limiting apparatus for a wind-assisted propulsion rotor.

### BRIEF DESCRIPTION OF DRAWINGS

FIG. 1 is a first view illustrating the structure of a wind-assisted propulsion rotor according to an embodiment of the present application.
FIG. 2 is an enlarged view of portion A in FIG. 1.
FIG. 3 is a second view illustrating the structure of a wind-assisted propulsion rotor according to an embodiment of the present application.
FIG. 4 is a sectional view along B-B plane in FIG. 3.
FIG. 5 is a third view illustrating the structure of a wind-assisted propulsion rotor according to an embodiment of the present application.
FIG. 6 is an enlarged view of portion C of FIG. 5.

### Reference list

- 100: base
- 200: inner tower
- 300: outer cylinder
- 400: alarm mechanism
- 1: limiting unit
- 11: roller mechanism
- 111: limiting roller
- 112: mounting bracket
- 1121: first end
- 1122: second end
- 1123: rotating shaft
- 12: adjustment mechanism
- 121: adjustment assembly
- 1211: fixed seat
- 1212: screw
- 1213: locking member
- 122: pressure detection member
- 13: elastic member
- 131: main body portion
- 1311: first adapter portion
- 1312: second adapter portion

### DETAILED DESCRIPTION

Technical solutions in embodiments of the present application will be described in conjunction with drawings in the embodiments of the present application. Apparently, the embodiments described herein are part of the embodiments of the present application. Generally, the components of embodiments of the present application described and illustrated in the drawings herein may be arranged and designed through various configurations.

It should be noted that similar reference numerals and letters denote similar items in the subsequent drawings; thus, once an item is defined in one drawing, it does not need to be further defined or explained in subsequent drawings.

In the description of the present application, it is to be noted that the orientational or positional relationships indicated by terms "above", "below", "left", "right", "vertical", "horizontal", "inside", "outside", and the like are based on the orientational or positional relationships illustrated in the drawings or the orientational or positional relationship that products of the present application are usually used in. These orientations or position relations are intended only to facilitate and simplify description of the present application and not to indicate or imply that a device or element referred to must have such specific orientations or must be configured or operated in such specific orientations. Thus, these orientations or position relations are not to be construed as limiting the present application. Moreover, terms "first", "second", and "third" are only for distinguishing the description and are not to be construed as indicating or implying relative importance. In the description of the present application, unless otherwise noted, the term "plurality of" or "multiple" means two or more.

In the description of the present application, it is to be noted that unless otherwise expressly specified and limited, the term "configured" or "connected" is to be construed in a broad sense, for example, as securely connected, detachably connected or internally connected; or mechanically connected or electrically connected. For those of ordinary skill in the art, meanings of the preceding terms can be understood according to situations in the present application.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

Embodiments of the present application are described below. Examples of the embodiments are illustrated in the drawings, where the same or similar reference numerals indicate the same or similar elements or elements having the same or similar functions. The embodiments described below with reference to the drawings are illustrative, only for explaining the present application, and not to be construed as limiting the present application.

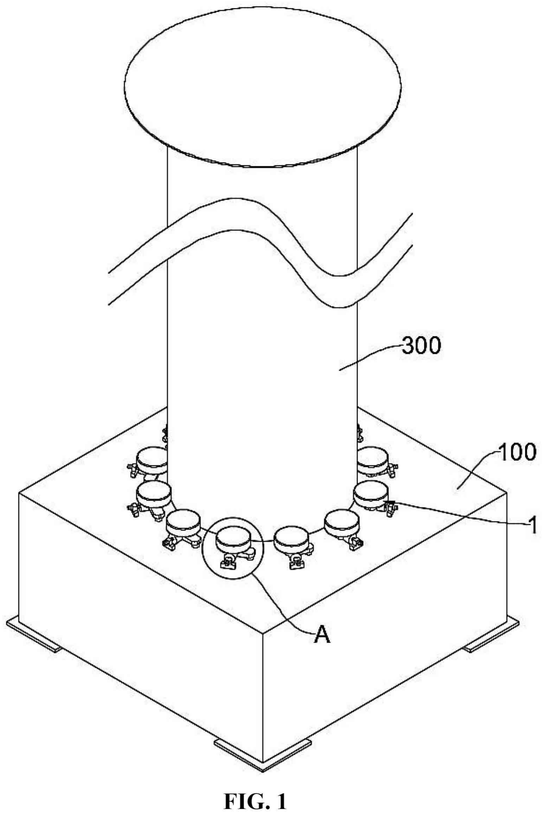

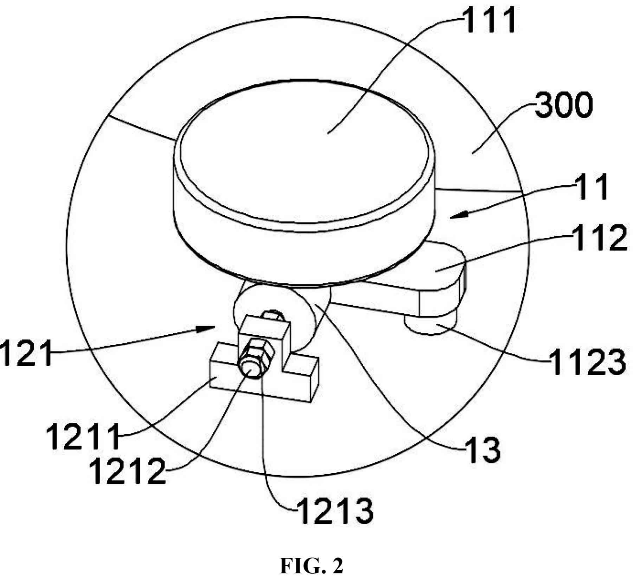

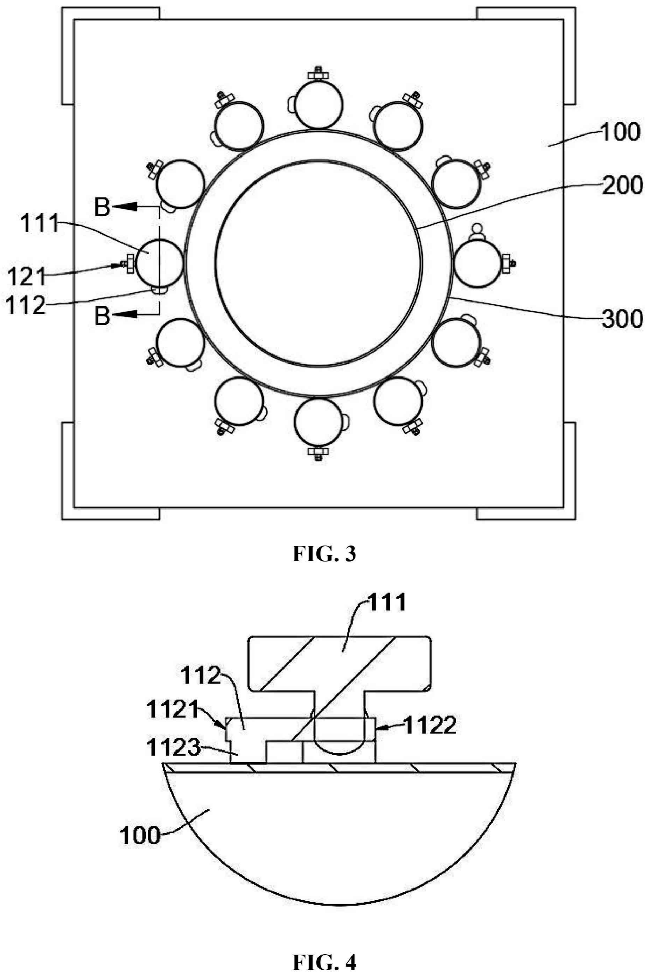

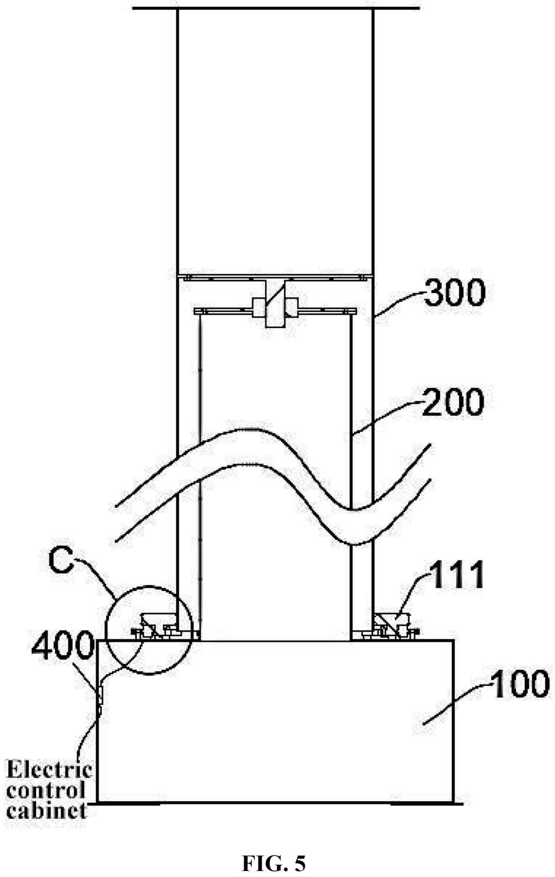

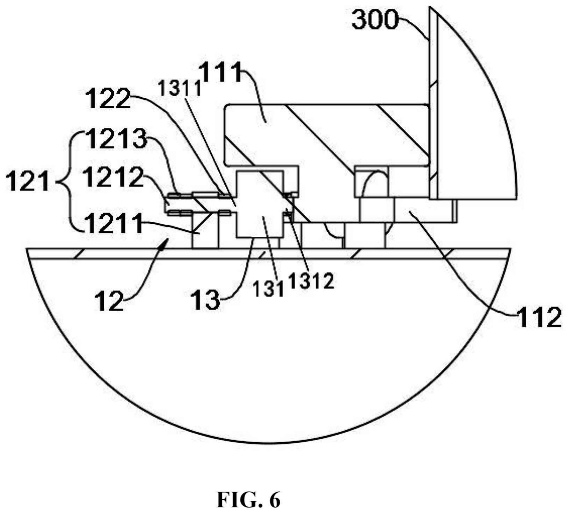

As shown in FIG. 1 to FIG. 6, this embodiment provides a limiting apparatus for a wind-assisted propulsion rotor; the wind-assisted propulsion rotor includes a base 100, an inner tower 200, and an outer cylinder 300, the inner tower 200 is fixedly disposed on the base 100, and the outer cylinder 300 is rotatably sleeved on the outer side of the inner tower 200. The limiting apparatus for the wind-assisted propulsion rotor includes multiple limiting units 1 distributed along the outer periphery or the inner periphery of the outer cylinder 300, and each limiting unit 1 includes a roller mechanism 11, an adjustment mechanism 12, and an elastic member 13; the roller mechanism 11 includes a limiting roller 111 and a mounting bracket 112, the mounting bracket 112 has a first end 1121 and a second end 1122 oppositely disposed along a first direction, the first end 1121 is rotatably disposed on the base 100 or the inner tower 200, the limiting roller 111 is rotatably disposed on the second end 1122, and the outer peripheral surface of the limiting roller 111 abuts against the outer wall or the inner wall of the outer cylinder 300; the adjustment mechanism 12 includes an adjustment assembly 121, one end of the adjustment assembly 121 abuts against the second end 1122, and the adjustment assembly 121 is configured to adjust the force between the limiting roller 111 and the outer cylinder 300; and the elastic member 13 is clamped between the adjustment assembly 121 and the second end 1122.

The outer peripheral surface of the limiting roller 111 abuts against the outer wall or inner wall of the outer cylinder 300. The adjustment assembly 121 can adjust the force between the limiting roller 111 and the outer cylinder 300 to ensure that the force between each limiting roller 111 and the outer cylinder 300 is substantially consistent. The elastic member 13 allows the limiting roller 111 to have a certain range of displacement, and absorbs and buffers the load of the outer cylinder 300 generated during high-speed operation, which ensures stability of the outer cylinder 300 during high-speed operation and facilitates an extended service life of the limiting roller 111. Moreover, the first end 1121 of the mounting bracket 112 is rotatably disposed on the base 100 or the inner tower 200, and the limiting roller 111 is rotatably disposed on the second end 1122 of the mounting bracket 112. Compared to that in the related art, this configuration not only facilitates the mounting and removal of the limiting roller 111 but also simplifies adjustment of the pressing force of the limiting roller 111, improving contact stability between the limiting roller 111 and the outer cylinder 300.

It should be noted that whether the limiting units 1 are distributed along the outer periphery or inner periphery of the outer cylinder 300 may be determined based on the diameter of the outer cylinder 300. To facilitate mounting of the limiting units 1 and ensure contact stability between the limiting roller 111 and the outer cylinder 300, when the diameter of the outer cylinder 300 is relatively small, the multiple limiting units 1 are mounted on the base 100; in other words, the multiple limiting units 1 are distributed along the outer periphery of the outer cylinder 300, the first end 1121 of the mounting bracket 112 is rotatably disposed on the base 100, and the outer peripheral surface of the limiting roller 111 abuts against the outer wall of the outer cylinder 300. When the diameter of the outer cylinder 300 is relatively large, multiple limiting units 1 are mounted on the inner tower 200; in other words, the multiple limiting units 1 are distributed along the inner periphery of the outer cylinder 300, the first end 1121 of the mounting bracket 112 is rotatably disposed on the inner tower 200, and the outer peripheral surface of the limiting roller 111 abuts against the inner wall of the outer cylinder 300.

Optionally, the first end 1121 of the mounting bracket 112 is provided with a rotating shaft 1123, a first end of the rotating shaft 1123 is fixedly connected to the first end 1121, and a second end of the rotating shaft 1123 is rotatably connected to the base 100 or the inner tower 200. Exemplarily, the second end of the rotating shaft 1123 may be rotatably connected to the base 100 or the inner tower 200 via a rotating support, such as a bearing, to enhance the smoothness of rotation of the mounting bracket 112. This configuration achieves a rotational connection between the mounting bracket 112 and the base 100, allows flexible radial movement of the limiting roller 111 when the pressing force between the limiting roller 111 and the outer cylinder 300 is adjusted, facilitates precise adjustment of the pressing force of the limiting roller 111 on the outer cylinder 300, and improves contact stability between the limiting roller 111 and the outer cylinder 300.

Optionally, the adjustment mechanism 12 also includes a pressure detection member 122, such as a force sensor. The pressure detection member 122 is configured to detect the pressure between the adjustment assembly 121 and the second end 1122. In this manner, the pressure detection member 122 can detect the pressure between the adjustment assembly 121 and the second end 1122 in real time, facilitating consistent force between each limiting roller 111 and the outer cylinder 300, improving mounting precision of the limiting roller 111, and enhancing operational stability of the outer cylinder 300.

Optionally, the limiting apparatus for the wind-assisted propulsion rotor also includes an alarm mechanism 400 configured to issue an alarm prompt based on the detection result of the pressure detection member 122. When the pressure detection member 122 detects that the pressing force of the limiting roller 111 on the outer cylinder 300 exceeds a specified range, the alarm mechanism 400 may issue an alarm prompt to timely notify personnel to operate the corresponding adjustment assembly 121 to adjust the pressing force, avoiding issues such as oscillation of the outer cylinder 300 due to uneven forces. It should be noted that the alarm prompt may include sound alarms, light alarms, or display of text or image information on a display, without limitation herein.

Optionally, the adjustment assembly 121 includes a fixed seat 1211, a screw 1212, and a locking member 1213. The fixed seat 1211 is fixedly disposed on the base 100 or the inner tower 200. The screw 1212 penetrates the fixed seat 1211 and abuts against the elastic member 13 and is threadedly connected to the fixed seat 1211. The locking member 1213 is configured to lock or unlock the screw 1212 with respect to the fixed seat 1211. In this embodiment, the locking member 1213 is a nut, and the number of nuts may be set as required, without limitation herein. When the pressing force between the limiting roller 111 and the outer cylinder 300 is adjusted, it is only necessary to unlock the locking member 1213 and rotate the screw 1212 so that the screw 1212 is controlled to advance to increase the pressing force of the limiting roller 111 on the outer cylinder 300 or the screw 1212 is controlled to retract to reduce the pressing force of the limiting roller 111 on the outer cylinder 300. Additionally, when a limiting roller 111 needs to be replaced, it is only necessary to loosen the locking member 1213 and retract the screw 1212 to separate the limiting roller 111 from the outer cylinder 300 so that the limiting roller 111 can be removed from the mounting bracket 112. Compared to that in the related art, this configuration facilitates quick replacement of the limiting roller 111, significantly reduces workload, and improves work efficiency.

Optionally, an even number of limiting units 1 are provided, and the multiple limiting units 1 are evenly distributed at intervals along the outer periphery or the inner periphery of the outer cylinder 300. Optionally, the even number of limiting units 1 are arranged in pairs opposite each other along the radial direction the outer cylinder 300, making the force on the outer cylinder 300 more uniform and improving the stability of the outer cylinder 300 during high-speed operation.

Optionally, the elastic member 13 is a cylindrical structure, and a first end and a second end of the elastic member 13 along the axial direction of the elastic member 13 abut against the adjustment assembly 121 and the second end 1122, respectively. The cylindrical structure of the elastic member 13 provides better elasticity and higher contact stability with the adjustment assembly 121 and the second end 1122 of the mounting bracket 112.

Optionally, the elastic member 13 includes a main body portion 131, and a first adapter portion 1311 is disposed on a first end of the main body portion 131 along a second direction. The first adapter portion 1311 is a frusto-conical structure, the large-diameter end of the first adapter portion 1311 is connected to the main body portion 131, and the small-diameter end of the first adapter portion 1311 abuts against the adjustment assembly 121. It should be noted that to ensure the elastic effect of the elastic member 13, the diameter of the main body portion 131 is typically larger while the size of the adjustment assembly 121 is smaller. This configuration, through the small-diameter end of the first adapter portion 1311 fitting with the adjustment assembly 121, can enhance contact stability between the elastic member 13 and the adjustment assembly 121, improve the elastic effect of the elastic member 13, and prolong the service life of the elastic member 13.

Optionally, the diameter of the large-diameter end of the first adapter portion 1311 is the same as the diameter of the main body portion 131, the diameter of the small-diameter end of the first adapter portion 1311 is the same as the diameter of the screw 1212, and the contact area between the first adapter portion 1311 and the screw 1212 equals the cross-sectional area of the small-diameter end of the first adapter portion 1311 (the cross-section is perpendicular to the axial direction of the first adapter portion 1311), thereby ensuring higher contact stability between the elastic member 13 and the adjustment assembly 121.

Optionally, a second adapter portion 1312 is disposed on a second end of the main body portion 131 along a second direction. The second adapter portion 1312 is a frusto-conical structure, the large-diameter end of the second adapter portion 1312 is connected to the main body portion 131, and the small-diameter end of the second adapter portion 1312 abuts against the second end 1122. It should be noted that to ensure the elastic effect of the elastic member 13, the diameter of the main body portion 131 is typically larger, and the size of the second end 1122 of the mounting bracket 112 is smaller. This configuration, through the small-diameter end of the second adapter portion 1312 fitting with the second end 1122 of the mounting bracket 112, can enhance contact stability between the elastic member 13 and the second end 1122 of the mounting bracket 112, improve the elastic effect of the elastic member 13, and prolong the service life of the elastic member 13.

Optionally, the diameter of the large-diameter end of the second adapter portion 1312 is the same as the diameter of the main body portion 131, the diameter of the small-diameter end of the second adapter portion 1312 is the same as the thickness of the second end 1122 of the mounting bracket 112, and the contact area between the second adapter portion 1312 and the second end 1122 of the mounting bracket 112 equals the cross-sectional area of the small-diameter end of the second adapter portion 1312 (the cross-section is perpendicular to the axial direction of the second adapter portion 1312), thereby ensuring higher contact stability between the elastic member 13 and the second end 1122 of the mounting bracket 112.

This embodiment also provides a wind-assisted propulsion system, including the preceding limiting apparatus for a wind-assisted propulsion rotor.

## Claims

1. A limiting apparatus for a wind-assisted propulsion rotor, wherein the wind-assisted propulsion rotor comprises a base (100), an inner tower (200), and an outer cylinder (300), the inner tower (200) is fixedly disposed on the base (100), and the outer cylinder (300) is rotatably sleeved on an outer side of the inner tower (200);
wherein the limiting apparatus for the wind-assisted propulsion rotor comprises a plurality of limiting units (1) distributed along an outer periphery or an inner periphery of the outer cylinder (300), and each limiting unit (1) of the plurality of limiting units (1) comprises:
a roller mechanism (11), wherein the roller mechanism (11) comprises a limiting roller (111) and a mounting bracket (112), the mounting bracket (112) has a first end (1121) and a second end (1122) that are disposed along a first direction, the first end (1121) is rotatably disposed on the base (100) or the inner tower (200), the limiting roller (111) is rotatably disposed on the second end (1122), and an outer peripheral surface of the limiting roller (111) abuts against an outer wall or an inner wall of the outer cylinder (300);
an adjustment mechanism (12), wherein the adjustment mechanism (12) comprises an adjustment assembly (121), one end of the adjustment assembly (121) abuts against the second end (1122), and the adjustment assembly (121) is configured to adjust a force between the limiting roller (111) and the outer cylinder (300); and
an elastic member (13) clamped between the adjustment assembly (121) and the second end (1122).

2. The limiting apparatus according to claim 1, wherein the adjustment mechanism (12) further comprises a pressure detection member (122) configured to detect a pressure between the adjustment assembly (121) and the second end (1122).

3. The limiting apparatus according to claim 2, further comprising an alarm mechanism (400) configured to issue an alarm prompt based on a detection result of the pressure detection member (122).

4. The limiting apparatus according to claim 1, wherein the adjustment assembly (121) comprises:
a fixed seat (1211) fixedly disposed on the base (100) or the inner tower (200);
a screw (1212), wherein the screw (1212) penetrates the fixed seat (1211) and abuts against the elastic member (13), and the screw (1212) is threadedly connected to the fixed seat (1211); and
a locking member (1213) configured to lock or unlock the screw (1212) with respect to the fixed seat (1211).

5. The limiting apparatus according to claim 1, wherein an even number of the plurality of limiting units (1) are provided, and the plurality of limiting units (1) are evenly distributed along the outer periphery or the inner periphery of the outer cylinder (300).

6. The limiting apparatus according to claim 1, wherein the elastic member (13) is a cylindrical structure, and a first end and a second end of the elastic member (13) along an axial direction of the elastic member (13) abut against the adjustment assembly (121) and the second end (1122), respectively.

7. The limiting apparatus according to claim 6, wherein the elastic member (13) comprises a main body portion (131), a first adapter portion (1311) is disposed on a first end of the main body portion (131) along a second direction, the first adapter portion (1311) is a frusto-conical structure, a large-diameter end of the first adapter portion (1311) is connected to the main body portion (131), and a small-diameter end of the first adapter portion (1311) abuts against the adjustment assembly (121).

8. The limiting apparatus according to claim 6, wherein the elastic member (13) comprises a main body portion (131), a second adapter portion (1312) is disposed on a second end of the main body portion (131) along a second direction, the second adapter portion (1312) is a frusto-conical structure, a large-diameter end of the second adapter portion (1312) is connected to the main body portion (131), and a small-diameter end of the second adapter portion (1312) abuts against the second end (1122).

9. The limiting apparatus according to claim 1, wherein the first end (1121) is provided with a rotating shaft (1123), a first end of the rotating shaft (1123) is fixedly connected to the first end (1121), and a second end of the rotating shaft (1123) is rotatably connected to the base (100) or the inner tower (200).

10. A wind-assisted propulsion system, comprising the limiting apparatus for the wind-assisted propulsion rotor according to any one of claims 1 to 9.
